# EUROPEAN PATENT APPLICATION

(11) **EP 3 457 351 A1**
(43) Date of publication of application: **20.03.2019**
(21) Application number: 16901560.9
(22) Date of filing: 12.05.2016
(51) Int. Cl.: G06Q 50/30, G07B 15/02, G07C 1/30, G07F 17/24, G08G 1/14

(54) **CONTROL SYSTEM AND PROCEDURE FOR VEHICLES AND PARKING SPACES FOR OUTDOOR PARKING LOTS**

(71) Applicant: Quercus Technologies, S.L., 43203 Reus (Tarragona) (ES)
(72) Inventor: MORAGAS LOREN, Jordi, 43203 Reus (Tarragona) (ES)
(74) Representative: Herrero & Asociados, S.L.
(86) International application number: PCT/ES2016/070355
(87) International publication number: WO 2017/194795

(57) **Abstract**

A control system and method for vehicles (11, 12) and parking spaces for outdoor parking lots (10), comprising:
- a reader (1) of identification labels for a vehicle (11) at the time of entry to an outdoor parking lot (10),
- a server (31) for obtaining a global image of the parking lot (10) and detecting at least one parking space in the image,
- multiple overhead cameras (2) covering at least one area (101, 102, 103, 104) of the parking lot (10) to capture at least one image of the vehicle (11) from the time of entry to a time of parking of the vehicle (11) in a parking space or a time of exit of the vehicle (11) from the parking lot (10); sending each captured image to the server (31) which gathers all the images in order to obtain the global image of the parking lot (10) and track the vehicle (11) in said image;
- a database (32) linked to the server (31) for storing each image of the vehicle (11) in association with its identification label.

## Description

### OBJECT OF THE INVENTION

The present invention falls within the technical sector of managing and operating uncovered outdoor parking lots, using image processing technologies from the images obtained by installing cameras in parking lots.

More specifically, the present invention relates to a control system and method for vehicles and parking spaces in outdoor parking lots, based on identifying vehicles and tracking them inside the parking lot.

### BACKGROUND OF THE INVENTION

Currently, the best known solutions for controlling parking spaces in both covered and uncovered (outdoor) parking lots are based on the use of presence sensors installed in the parking spaces themselves.

The sensors that are currently used are installed one for each parking space and with them it is possible to know if a space is occupied or vacant, information that can help drivers find parking spaces quicker, although it cannot be known what vehicle is occupying the free space.

In outdoor parking lots, nearly all current solutions for achieving the objective set out are based on sensors installed in the ground. These sensors have a considerable facilities cost. The ground must be drilled to install them.

The presence sensors used in parking lots are either powered by electrical power, battery or solar energy. Those that operate with electrical power are able to have a red light or green light that indicates whether the space is occupied or not, although in this case, installation is more costly since it is necessary to install the power cable. With those that operate with battery, the battery must be changed approximately every five years, and they cannot have red and green lights since they require considerable amounts of energy. Those that operate with solar energy also cannot have red and green lights for the same reason, however, they do not require intervention every five years. Nevertheless, the greatest drawback of this type of sensor is that they need solar energy to recharge.

On the other hand, the presence sensors do not effectively solve the matter of security and surveillance in parking lots.

To monitor the inside of a parking lot, security cameras are usually used. However, these cameras are in no way related to the sensors placed in the parking spaces that determine whether the space is free or occupied. Therefore, the security cameras are not involved in controlling the spaces. There is also no tracking information (video) of the movements of the vehicles in the outdoor parking lot.

The objective technical problem presented here is to provide a method and means in an outdoor parking lot for identifying which vehicle is parked in which parking space and for even tracking this vehicle while it is in the parking lot in order to control it in space and time.

### DESCRIPTION OF THE INVENTION

The present invention is used to solve the aforementioned problem, resolving the drawbacks of the solutions mentioned in the state of the art, by means of a system based on computer vision that identifies which vehicle is occupying a parking space of an outdoor parking lot.

The present invention makes it possible to know not only which spaces of an outdoor parking lot are occupied, but also which car is occupying each of the spaces and even for how much time.

Given that the technology used is computer vision, the function of monitoring is added to the previous features, since it is also possible to use cameras to record all movements of the vehicles entering/exiting the parking lot and for parking lot security.

The algorithms of computer vision used in the invention have two different functions: the first is to follow/track vehicles in the image, and the second is to detect whether the spaces of the parking lots are occupied or free and to detect movement around them. In both cases, the computer vision must be robust, being able to operate under different light conditions (sunny days, cloudy days and all gradations thereof) and under different weather conditions. The algorithms are capable of solving the different situations in which there may be vehicles in the parking lot, for example, when two vehicles cross paths in the parking lot, the system is capable of distinguishing the vehicles and knowing which identification label (for example, license plate) belongs to each one.

The present invention can be applied to:
i) On-street parkings, also called blue and green zone parking lots.
ii) Off-street parkings, which are private parking lots constructed outdoors, both on the top floors of buildings as well as uncovered parking lots on the ground floor.

One aspect of the invention relates to a control method for vehicles and parking spaces for outdoor parking lots comprising the following steps:
- read an identification label of a vehicle (for example, its license plate) that enters an outdoor parking lot at the time of entry,
- obtain a global image of the outdoor parking lot and detect in said image at least one parking space that can be free or occupied,
- capture at least one image of the vehicle from the time of entry until a final time, which can refer to the time of parking the vehicle in one of the detected free spaces or the time of exit when the vehicle leaves the outdoor parking lot,
- associate each captured image of the vehicle with the identification label read,
- track the vehicle in the global image of the parking lot using the sum of each captured image of the vehicle.

Another aspect of the invention relates to a system for outdoor parking lots which implements the control method for vehicles and parking spaces described above comprising the following components:
- at least one reader for reading an identification label of a vehicle at the time of entry to the outdoor parking lot,
- at least one server for obtaining a global image of the parking lot and detecting at least one space in it, which can be free or occupied,
- a plurality of cameras located overhead in the parking lot, each covering at least one area of the outdoor parking lot, to capture images of the vehicle from the time of entry until a final time, which can be the time of parking the vehicle in a space or the time when the vehicle exits the outdoor parking lot; each camera sending the captured images of the vehicle to the server so that it gathers all the images and obtains the global image of the outdoor parking lot, for which the server tracks the vehicle;
- a database linked to the server for storing each image of the vehicle with the associated identification label that was read upon entry.

The advantages of the method and system described with respect to the solutions of the prior state of the art are mainly derived from the fact that while none of the sensors that are currently used for controlling outdoor parking lots identify the license plate of the vehicle that is parked or allow for video recording for security reasons, the present invention allows for:
- Determining the number of vacant and occupied spaces even in blue or green parking lots.
- Guiding the driver when parking in all types of outdoor parking lots, assisted for example with information panels regarding the on-street parking or off-street parking.
- Recording a video of each vehicle accessing the parking lot and of all movements that occur near each vehicle; thus, if complaints arise, all the videos associated with a vehicle can be consulted/looked up and the incident can be resolved quickly and effectively. For example, in the case of losing the vehicle because the driver does not remember where he left it, the invention makes it possible to find the area of the parking lot where the vehicle is parked. The video of the entry, exit and route of each vehicle in the parking lot captured by the cameras of the parking lot enable possible incidents to be known in real time. Likewise, the video recording of vehicles and people who have been close to each of the parked vehicles contributes to this monitoring of the parking lot.
- Determining how much time each vehicle has been parked in each parking space.
- Enables the different parking fees to be charged based on where the vehicles are parked, creating areas with different rates. The invention envisages communication with the payment means provided for in the parking lots.

### BRIEF DESCRIPTION OF THE FIGURES

What follows is a very brief description of a series of drawings that aid in better understanding the invention, and which are expressly related to an embodiment of said invention that is presented by way of a non-limiting example of the same.
FIGURE 1 shows a schematic representation of an outdoor parking lot in which the vehicles are identified and tracked by means of a control system for vehicles and parking spaces, according to a preferred embodiment of the invention.
FIGURE 2 shows a schematic representation of an outdoor parking lot in which the vehicles are identified and tracked, in addition to helping drivers search for a parking space, by means of the control system for vehicles and parking spaces according to a possible embodiment of the invention.
FIGURE 3 shows a block diagram of the means of the control system for vehicles and parking spaces involved in the processing of images for said control, according to a possible embodiment of the invention.

### PREFERRED EMBODIMENT OF THE INVENTION

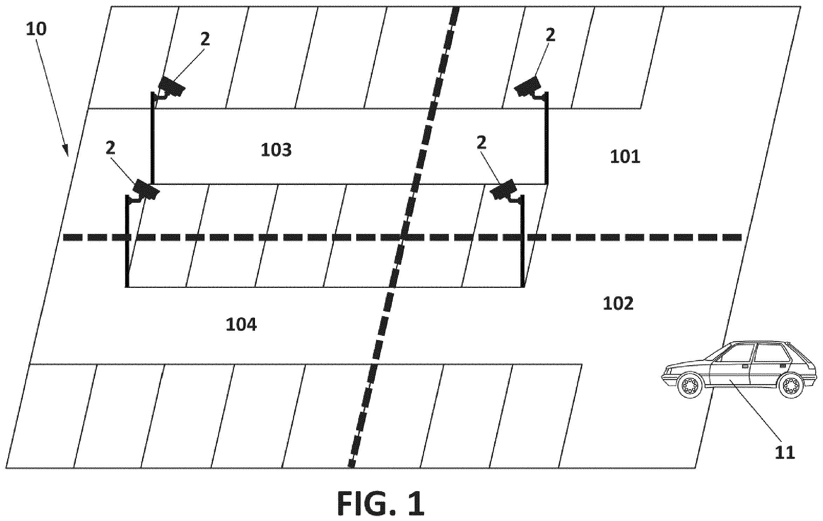

Figure 1 shows a possible embodiment of the control system for vehicles and parking spaces installed in an outdoor parking lot (10) comprising a plurality of video cameras (2) placed overhead. The height at which the cameras (2) are installed depends on the surface of the outdoor parking lot (10) that must be covered, the size of the outdoor parking lot (10), the resolution of the cameras (2) and the installation options. For example, the height can be between approximately 6 and 15 metres.

By combining the images of all the overhead cameras (2), a complete or global image of the parking lot (10) can be recreated, and by using computer vision algorithms, the vehicles (11) that enter the parking lot (10) can be tracked on it until they exit, such that by analysing this global image of the parking lot (10), it can be known where each vehicle (11) is located in the parking lot, and therefore, in what place, space and/or area it is parked.

For example, in the outdoor parking lot (10) shown in Figure 1, which can be divided into four areas (101, 102, 103, 104) by using combination algorithms of the images captured by the four video cameras (2), each camera (2) associated to each area (101, 102, 103, 104). The combination algorithms of images enable the composition of the global image of the parking lot (10) to be made from different images and different geographical arrangements of the same. Thus, the complete image of the parking lot is provided virtually and the vehicles can be tracked on said image.

Furthermore, by using the overhead cameras (2) the movement that occurs around all the spaces and the vehicles, as well as vehicles other than the one parked and people, is also detected, such that videos of all that occurs around the parking spaces can be recorded.

The overhead cameras (2) should be installed at a specific height, such that if there are no elements in the street such as street lamps, billboards, etc. or walls, buildings, urban fixtures, etc. to which the cameras can be fastened, a mast can be used for said purpose.

To select the cameras (2), different criteria can be established, such as providing clear, sharp images during day and night and a sensor of the camera (2) with an extended dynamic range, in order to function well during day and night. Another requirement would be the option of changing the configuration of the cameras (2) remotely, using protocol from an application that runs in a programmable electronic device.

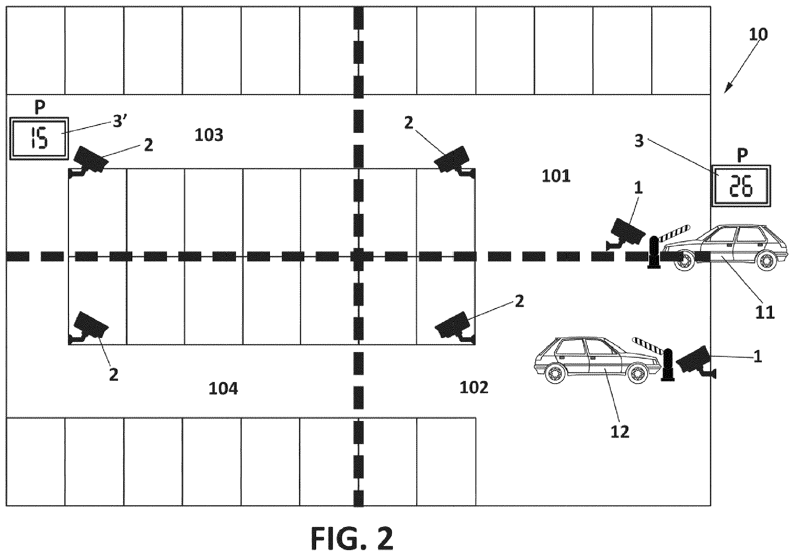

Figure 2 show the means used to identify, track and help vehicles that enter (11) and exit (12) the parking lot (10). In the lanes or intersections where the driver must decide in which area of the parking lot they want to park, information panels (3, 3') that can indicate how many parking spaces are free for the user when choosing one area or another are installed. The information panels (3, 3') can thus provide information according to area. Regarding area, it can refer to the total area of the parking lot (10) or internal area groups. For example, in Figure 2, a first information panel (3) can provide information about the spaces in the first areas (101, 102) closest to the parking lot (10) accesses, while a second information panel (3) can provide information about the spaces in the other areas (103, 104). For outdoor parking lots, the panels (3, 3') must be visible under any light condition, especially on sunny days.

When the vehicle (11) enters the parking lot (10), the system first identifies the vehicle (11, 12) by means of at least one identification label, for example, the license plate, although other features of the vehicle can also be used to identify it, such as model, colour, etc. The license plate of the vehicles (11) that access the area of the parking lot (10) can be read while the vehicle is stopped or in motion. The equipment that reads the license plate of the vehicle (11, 12) can be different types:
- Readers (1) of identification labels, including the license plate, in which all image processing and recognition is carried out by the same camera used, also called All-in-One readers.
- License plates readers (1) that use cameras for capturing images, these images are sent to a central server which identifies the license plates of the vehicles (11) that access the parking area with the Optical Character Recognition (OCR) process.

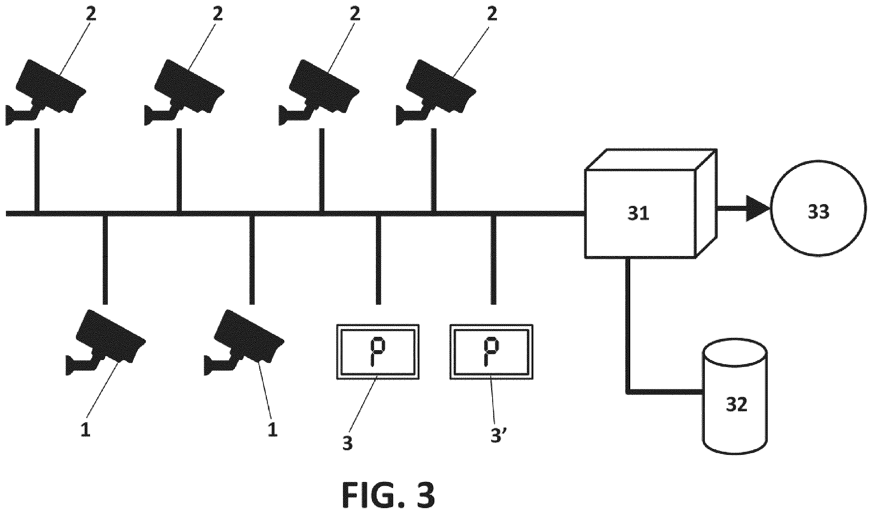

The identification labels of the vehicles (11, 12) can be read by using one or more cameras for each entry or exit lane of the parking lot (10). All readers (1) of the parking lot (10) send the read information to a server (31) of the system, shown in Figure 3, which is responsible for carrying out all other tasks of the invention.

To avoid the data protection law in countries in which it is an obstacle and for simple on-street parking lots, the system can function with all the features described previously, but it can also function without the license plate of the vehicle. The function of reading the license plate of the vehicle is to only put a unique label on each vehicle that enters the parking lot, but this label can also be made by means of a unique numeric code. As such, all the video recordings captured by the cameras (2) and the cameras of the readers (1), as well as the space where the vehicle is parked are associated with the vehicle in a database (32), without needing to know the license plate thereof.

Once the vehicle (11) has been identified by means of one of the labels at the entrance of the parking area (11), it is then tracked by the overhead cameras (2) which obtain an overall image of the parking area after combining the image obtained by all of them in the server (31). To track the vehicles (11, 12) from the time of entry until the time of exit from the parking lot (10), several vision algorithms are used, determining singular points of the vehicles (11, 12), such that the invention is capable of distinguishing vehicles when different vehicles (11, 12) cross paths in the parking lot (10). Different computer vision techniques divided into different steps are used, which in an exemplary embodiment are the following:
- Detecting singular points or features by means of the Shi & Tomasi method.
- Detecting movement by the Lucas-Kanade optical flow method improved with forward-backward error correction techniques. Thus, only the singular points in motion are considered.
- Mapping or matching of features between consecutive frames is established by means of the Hungarian Method with the weights defined by the known prior route of the vehicle. In other words, if a set of points is directed to the left side of the image and another set of points is directed to the right side of the image, more weight is always placed on the object that is directed to the left so that it continues to the left, and not to the right. Thus, even if two vehicles have similar singular points, they would not be confused when crossing paths thanks to the study of the route.

- Once the true route of the vehicle is defined, the position that it will have in the following frame is calculated by means of a Kalman filter in order to be more robust in possible blockages of the vehicle.
- If an object stops moving in the image during a specific number of frames, it will be considered to be parked at that point.

The mentioned techniques are an example on which the used algorithms are based, which can apply combinations and modifications of the same.

The previous computer vision algorithms are run in the same server (31), shown in Figure 3, which receives the images from all the overhead cameras (2), such that the system knows where each vehicle (11, 12) is at all times and it knows the identification (for example, license plate) of each vehicle (11, 12) read and sent by the readers (1) to the server (31). The global image of the parking lot (10) is obtained by combining all the overhead cameras (2) installed in all the areas (101, 102, 103, 104) in the server (31), which gathers all of them until achieving the real or simulated complete image of the parking lot (10). In other words, the computer vision algorithms that are used to track the vehicles do not necessarily have to be used on the combined image, but instead they can be applied to the individual images received by each camera (2).

When a vehicle occupies a parking space, the vehicle in that space is recorded. The server (31) can access a database (32) to be able to make the association between images coming from the cameras (2) and the identification of the vehicles (11, 12) provided by the readers (1). When a vehicle (11, 12) leaves a parking space, the identity of the vehicle that has left the space is recorded and, by using the same vision algorithms, the vehicle is tracked through the parking lot (19) to determine if it is going to occupy another space or if it is going towards the exit of the parking lot. When the vehicle (12) reaches the exit area of the parking lot, the license plate or identification label used is read just as it was done at the entrance and its exit from the parking lot is recorded in the server (31).

As shown in Figure 3, the system further comprises an API or application programming interface (33) that enables the server (31) to communicate with other external applications or with a graphical management interface. The server (31) can provide, through said API (33), the information resulting from the analysis of the images on which spaces are free/occupied so that it is provided by the information panels (3, 3') and is used to guide the driver in the parking lot (10).

Furthermore, the system can have a map where the parking spaces are marked and which provide the information panels (3, 3') to the driver and operator of the parking lot (10). Thus, it is possible to know where a vehicle (11, 12) is parked in the parking lot (10) and how many free or occupied spaces there are in the parking lot (10) or in different areas (101, 102, 103, 104) thereof.

The system provides the operator of the parking lot (10) with a management application that can have a graphical interface which shows the image of the entire parking lot (10), free and occupied spaces, and through which any inquiry/query about a desired space can be made, for example, how much time a space has been occupied, the license plate of a parked vehicle, the video of the vehicle accessing the space or the photo used to read the license plate of the vehicle. By using this application and by means of the license plate or date and time, inquiries on all movements made by the vehicles (11, 12) in the parking lot (10) can be made. The management application can be implemented in web format and run by any browser that is on the network of the server (31) of the parking lot (10). Thus, any operator of the parking lot (10) can carry out actions by using a simple smartphone or tablet or from any terminal in which the network is accessed by a browser.

The invention itself provides all the features indicated previously, but it has others that are derived from the feature of identifying the vehicle and associated in time and space with a parking space, features that become very important, such as communicating the information obtained by the described system to the payment systems found in parking lots. Thus, the control system for vehicles and spaces can be integrated with the parking lot payment machines, which enables parking lot users to go to the automatic teller machine and, after inserting the ticket, know the location of their vehicle in the parking lot, and/or that a different fee is applied based on the area where the vehicle is parked. For example, this integration of the control system for vehicles and spaces with the payment system enables:
- With the information provided by the system via the API or application programming interface (33), it enables fees to be charged in different amounts based on the area where the car is parked.
- In the case that the driver loses their vehicle, the system can communicate the location of the vehicle to the parking lot payment system; thus, when a user is going to pay for off-street parking, the system already indicates to them where their parked vehicle is.

- In on-street parking lots, the invention is capable of communicating to the parking lot payment system how much time each vehicle has been parked, and therefore, if the maximum parking time has been exceeded without needing to have a person or mobile car monitor it.
- In the case of surface parking lots, the invention is also capable of functioning without a ticket, if the operator of the parking lot so desires. Thus, a person can park a vehicle and then return to their car and leave without stopping at any payment point, if they have already been registered as a customer of the parking lot. Alternatively, there can also be a mixed solution, in which the same parking lot can have users that use the parking lot with a ticket as well as others who are previously registered as customers.

The overhead cameras (2), in addition to the described use for tracking the vehicles (11, 12), can also be used for parking lot (10) security. The server (31) to which the cameras are connected can continuously record all that occurs in the parking lot (10), or it can record only videos associated with each movement of the vehicles. In other words, since the system knows where the vehicles are located at all times, it can make a video of all movements through the parking lot (10) that can be used for security reasons. The system also records videos of the vehicles or people that approach a parked car. Thus, it can carry out a search for each vehicle license plate and display on different videos where each vehicle has passed until parking and then exiting the parking lot (10), as well as the videos of people or other vehicles that have come close to it.

For example, if there are user complaints of damage on the vehicle, the operator can search all videos of all the movements made around the vehicle in question by means of the management application that communicates with the server (31) and check them to see whether the damage occurred in the parking lot (10), and if so, when and how it occurred, thanks to the images taken in real time by the cameras (2).

When the parking lot users are frequent users, they can reserve spaces: if a vehicle parks in a space reserved for another vehicle, the system detects it and sends a notification to the operator of the parking lot (10). Also, in the case that a user informs the operator that their vehicle is going to be parked for several days (airports, for example), if the vehicle moves before those reported days, the operator also receives, for security reasons, a notification.

In addition to the advantages of the features of the invention over traditional sensors, other advantages are also achieved:
- The product is simpler to install. The installation of a sensor in each parking space is costly in time and money.
- The solution with sensors requires a sensor for each space.
- The batteries of the sensors that function with them must be replaced every 5 years.
- With a single overhead camera, a surface equivalent to 35-45 vehicle spaces can be monitored.
- The economic cost of installation is lesser.

## Claims

1. A method for controlling vehicles (11, 12) and parking spaces for outdoor parking lots (10), **characterised by** comprising the following steps:
- reading an identification label of a vehicle (11) that enters an outdoor parking lot (10) at an time of entry,
- obtaining a global image of the outdoor parking lot (10) and detect in the global image of the outdoor parking lot (10) at least one parking space that is selected between a free space and occupied space,
- capturing at least one image of the vehicle (11) from the time of entry until a final time, which is selected between the time of parking the vehicle (11) in a detected free space and the time of exit when the vehicle (11) leaves the outdoor parking lot (10),
- associating each captured image of the vehicle (11) with the identification label of the vehicle (11),
- tracking the vehicle (11) in the global image of the outdoor parking lot (10) by means of the sum of each captured image of the vehicle (11).

2. The method according to claim 1, **characterised in that** the vehicle (11) is tracked in the global image of the outdoor parking lot (10) by means of computer vision algorithms.

3. The method according to claim 2, **characterised in that** tracking the vehicle (11) in the global image of the outdoor parking lot (10) comprises distinguishing by means of computer vision algorithms among vehicles (11, 12) that cross paths in the outdoor parking lot (10).

4. The method according to any of the preceding claims, **characterised in that** the identification label is the license plate of the vehicle (11).

5. The method according to any of the preceding claims, **characterised by** further comprising informing of at least each free space detected in at least one area (101, 102, 103, 104) of the outdoor parking lot (10).

6. The method according to any of the preceding claims, **characterised by** further comprising querying at least one captured image of the vehicle (11) using the identification label of the vehicle (11).

7. The method according to claim 6, **characterised in that** the query comprises determining in which detected occupied space the vehicle (11) is parked.

8. The method according to any of claims 6-7, **characterised in that** the query comprises determining the time of parking the vehicle (11) in a specific space detected as occupied.

9. The method according to any of the preceding claims, **characterised in that** the image of the vehicle (11) is captured by using at least one camera (2) located overhead, covering at least one area (101, 102, 103, 104) of the outdoor parking lot (10).

10. The method according to any of the preceding claims, **characterised in that** the identification label of the vehicle (11) is read by using at least one camera in at least one entrance area (101) of the outdoor parking lot (10).

11. The method according to any of the preceding claims, **characterised by** further comprising reading the identification label of the vehicle (11) at the time of exit by using at least one camera in at least one exit area (102) of the outdoor parking lot (10).

12. A system for controlling vehicles (11, 12) and parking spaces for outdoor parking lots (10), **characterised in that** it comprises:
- at least one reader (1) for reading an identification label of a vehicle (11) that enters an outdoor parking lot (10) at a time of entry,
- at least one server (31) configured to obtain a global image of the outdoor parking lot (10) and detect in the global image of the outdoor parking lot (10) at least one space that is selected between a free space and occupied space,
- a plurality of cameras (2) located overhead covering at least one area (101, 102, 103, 104) of the outdoor parking lot (10) to capture at least one image of the vehicle (11) from the time of entry until a final time, which is selected between the time of parking the vehicle (11) in a detected free space and the time of exit when the vehicle (11) leaves the outdoor parking lot (10); the plurality of cameras (2) sending each captured image of the vehicle (11) to the server (31) which gathers all the images received in order to obtain the global image of the outdoor parking lot (10) and track the vehicle (11) in said global image of the outdoor parking lot (10);
- a database (32) linked to the server (31) for storing each captured image of the vehicle (11) in association with the identification label of the vehicle (11).

13. The system according to claim 12, **characterised in that** the server (31) uses computer vision algorithms.

14. The system according to any of claims 12-13, **characterised by** further comprising an application programming interface (33) linked to the server (31) for querying at least one captured image of the vehicle (11) by using the identification label of the vehicle (11).

15. The system according to any of claims 12-14, **characterised by** further comprising at least one information panel (3, 3') located in at least one area (101, 102, 103, 104) of the outdoor parking lot (10) to inform of at least each free space detected in at least one area (101, 102, 103, 104) of the outdoor parking lot (10).
